# EUROPEAN PATENT APPLICATION

(11) **EP 4 226 991 A1**
(43) Date of publication of application: **16.08.2023**
(21) Application number: 22020047.1
(22) Date of filing: 10.02.2022
(51) Int. Cl.: B01D 53/14, B01D 53/22

(54) **PROCESS AND PLANT FOR REDUCING CARBON DIOXIDE (CO2) CONTENT FROM A RECYCLE GAS**

(71) Applicant: L'Air Liquide, Société Anonyme pour l'Etude et l'Exploitation des Procédés Georges Claude, 75007 Paris (FR)
(72) Inventor: Schmidt, Sophia, D-60439 Frankfurt am Main (DE); Linicus, Matthias, D-60439 Frankfurt am Main (DE)
(74) Representative: Dropsch, Holger

(57) **Abstract**

A process for reducing carbon dioxide (CO₂) content from a recycle gas in a plant (100, 200) is provided. The process includes providing an absorption unit (102, 202, 204) that receives a raw synthesis gas comprising the synthesis gas components hydrogen (H₂), carbon monoxide (CO), and CO₂, and a lean solvent, preferably comprising methanol, and that produces a clean synthesis gas and a laden solvent; providing a flash regeneration unit (104, 208) that flashes the laden solvent received from the absorption unit (102, 202, 204) to generate a recycle gas comprising H₂, CO, and CO₂ and a partially laden solvent; providing a compressor (106A, 216A) that compresses the recycle gas before directing the recycle gas to the absorption unit (102, 202, 204); integrating a membrane unit (108, 206) between the flash regeneration unit (104, 208) and the compressor (106A, 216A) or between the compressor (106A, 2016A) and the absorption unit (102, 202, 204), wherein the membrane unit (108, 206) comprises a CO₂ selective membrane and receives the recycle gas from the flash regeneration unit (104, 208) after flashing; and reducing the CO₂ content in the recycle gas by permeating a CO₂ rich gas stream through the membrane to a permeate side of the membrane and retaining the recycle gas comprising a H₂ and CO rich gas stream on a retentate side of the membrane.

## Description

### TECHNICAL FIELD

The present disclosure relates generally to a process and plant for cleaning a raw synthesis gas by absorption with a solvent; more specifically, the present disclosure relates to a process and plant for reducing carbon dioxide (CO₂) content from a recycle gas obtained in the gas cleaning process or plant, thereby improving recovery of valuable products from the recycle gas and reducing utility consumption. The present disclosure also relates to a process for recovering synthesis gas components from a recycle gas in an absorption plant.

### BACKGROUND

Typically, raw syngas or synthesis gas (syngas) contains hydrogen (H₂) and carbon monoxide (CO) as primary components along with few acidic, sulfur containing or otherwise undesired components like carbon dioxide (CO₂), hydrogen sulfide (H₂S), carbonyl sulfide (COS) and hydrogen cyanide (HCN). For removing such undesired components, gas cleaning processes based on absorption or gas washing with suitable solvents, e. g. the Rectisol process, are well known from the prior art and are often employed processes for separating such undesired components from the syngas. Details of the Rectisol process are given in the prior art, e. g. Ullmann's Encyclopedia of Industrial Chemistry, 6th ed. (2002), Vol. 15, page 399 - 407, Chapter "Gas Production", Subchapter 5.4.2.1 "Physical Absorption Processes". A special reference is made to Fig. 46 on page 401 which shows the selective Rectisol process for separate removal and recovery of CO₂ and H₂S from a raw synthesis gas which is advantageous since it facilitates sulfur recovery from the H₂S containing offgas.

The Rectisol process uses cold methanol as solvent to absorb these undesired components in an absorber unit or a scrubbing unit, also termed gas washing unit. Afterwards, laden methanol, i. e. methanol containing such undesired components as mentioned above, is flashed in one or more consecutive flash vessels for solvent recovery, whereby flashed gases are obtained which comprise the undesired components. Disadvantageously, the flashed gases may include the main syngas compounds H₂ and CO which should be recovered as they are valuable products and a certain amount of CO₂ due to the absorption property of the methanol. Such valuable products are recovered by recompressing the flashed gases by a recompressor and routing the recompressed flashed gases as recycle gas to the absorber unit.

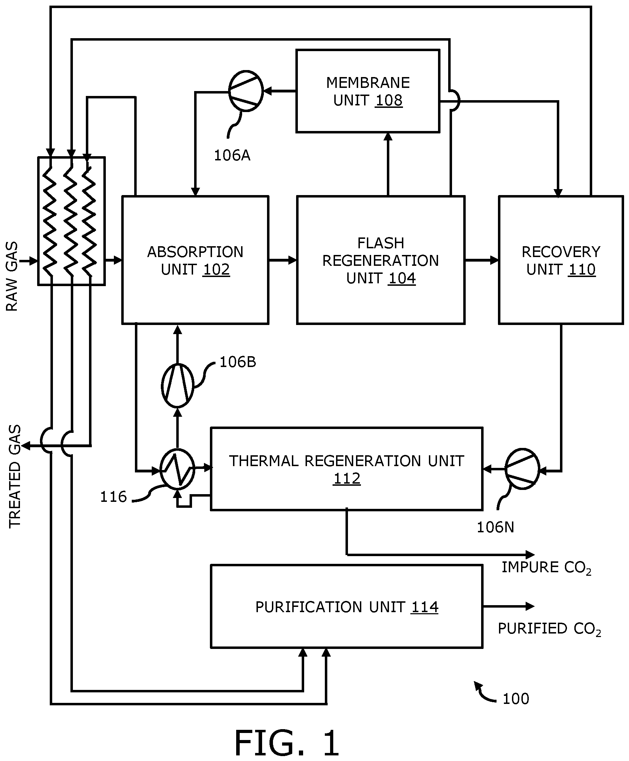

Laid-open international patent application WO 2019/242883 A1 gives an example on the processing and use of flashed gases retrieved from laden solvents in the context of a synthesis gas cleaning absorption process, see Fig. 1: A CO₂-laden solvent from a CO₂ absorption stage 6 is flashed in an intermediate pressure flash vessel 50 followed by a low pressure flash vessel 55. The flashed gases are recycled to the absorber via dedicated recycle compressors 31, 34.

However, a high concentration of CO₂ in the flashed gases leads to a higher volume of the recycle gas which has to be compressed; thereby a larger size of the recycle gas compressor with possibly more compression stages and a larger absorber unit are required. As the number and/or size of pieces of equipment increases, electricity consumption and other utility consumption also increases. The greater number and/or size of pieces of equipment adds thus to both the additional capital expenditure (CapEx) and the operational expenditure (OpEx).

In one way, the electricity consumption may be reduced by partly removing the CO₂ from the recycle gas. Existing approaches achieve this by either rewashing the CO₂ in a medium pressure (MP) flash vessel or increasing pressure of a flash vessel. Disadvantages of such existing approaches are a higher utility consumption; additionally, more H₂ and CO is reabsorbed which is undesired since it leads to lower H₂ and CO recovery in the syngas accordingly.

One common disadvantage of the existing approaches is thus the need for more and/or larger equipment and the consumption of a higher amount of electricity for recompressing the recycle gas.

Therefore, there is a need to address the aforementioned technical drawbacks in existing technologies in reducing carbon dioxide (CO₂) content from the recycle gas obtained by cleaning a raw synthesis gas by absorption with a solvent.

### SUMMARY

The present disclosure seeks to provide an improved approach for reducing carbon dioxide (CO₂) content from a flash gas recycled to an absorption unit, termed recycle gas for the purposes of this disclosure. An aim of the present disclosure is to provide a solution that overcomes at least partially the problems encountered in prior art and provide an improved process and plant for reducing the carbon dioxide (CO₂) content in the flashed gases, thereby improving recovery of valuable products such as hydrogen (H₂) and carbon monoxide (CO) from the flash gas recycled to an absorption unit and reducing utility consumption. The object of the present disclosure is achieved by the solutions provided in the enclosed independent claims. Advantageous implementations of the present disclosure are further defined in the enclosed dependent claims.

According to a first aspect, the present disclosure provides a process for reducing carbon dioxide (CO₂) content from a recycle gas in a plant, wherein the process comprises:
providing an absorption unit that receives a raw synthesis gas comprising the synthesis gas components hydrogen (H₂), carbon monoxide (CO), and CO₂, and a lean solvent, preferably comprising methanol, and that produces a clean synthesis gas and a laden solvent;
providing a flash regeneration unit that flashes the laden solvent received from the absorption unit to generate a recycle gas comprising H₂, CO, and CO₂ and a partially laden solvent;
providing a compressor that compresses the recycle gas before directing the recycle gas back to the absorption unit;
integrating a membrane unit between the flash regeneration unit and the compressor or between the compressor and the absorption unit, wherein the membrane unit comprises a CO₂ selective membrane and receives the recycle gas from the flash regeneration unit (104, 208) after flashing; and
reducing the CO₂ content in the recycle gas by permeating a CO₂ rich gas stream through the membrane to a permeate side of the membrane and retaining the recycle gas comprising a H₂ and CO rich gas stream on a retentate side of the membrane.

The process for reducing the CO₂ content from the recycle gas in the plant according to present disclosure is of advantage as the recycle gas flow rate is reduced by depleting the CO₂ upstream of the compressor by permeating the CO₂ rich gas stream through the membrane to the permeate side of the membrane, thereby the compressor compresses a smaller volume of the recycle gas with lower electricity consumption. The size of the compressor and/or the number of compressor stages may also be reduced. Moreover, the inventive process comprises retaining the recycle gas comprising the H₂ and CO rich gas stream on the retentate side of the membrane and thus increases the recovery of H₂ and CO from the recycle gas. Due to integration of the membrane unit to reduce CO₂ from the recycle gas, back-washing of CO₂ in the flash regeneration unit becomes less important or even obsolete, thus leading to savings in solvent circulation, and also reduced utility consumption in the plant.

According to a second aspect, the present disclosure provides a process for recovering synthesis gas components from a recycle gas in a plant, comprising:
providing an absorption unit that receives a raw synthesis gas comprising the synthesis gas components hydrogen (H₂), carbon monoxide (CO), and a lean solvent, preferably comprising methanol, and that produces a clean synthesis gas and a laden solvent;
providing a flash regeneration unit that flashes the laden solvent received from the absorption unit to generate a recycle gas comprising H₂, CO, and CO₂ gas and partially laden solvent;
providing a compressor that compresses the recycle gas before directing the recycle gas to the absorption unit;
integrating a membrane unit between the flash regeneration unit and the compressor or between the compressor and the absorption unit, wherein the membrane unit comprises a CO₂ selective membrane and receives the recycle gas from the flash regeneration unit after flashing;
reducing the CO₂ content in the recycle gas by permeating a CO₂ rich gas stream through the membrane to a permeate side of the membrane and retaining the recycle gas comprising a hydrogen (H₂) and carbon monoxide (CO) rich gas stream on a retentate side of the membrane; and
compressing the recycle gas comprising the H₂ and CO rich gas stream using the compressor and transmitting the compressed recycle gas to the absorption unit to increase the recovery of synthesis gas components comprising hydrogen (H₂) and carbon monoxide (CO).

The process for recovering synthesis gas components such as H₂ and CO from the recycle gas in the plant according to present disclosure is of advantage in that recycle gas flow rate is reduced by depleting the CO2 upstream of the compressor by permeating the CO2 rich gas stream through the membrane to the permeate side of the membrane, thereby the compressor compresses a smaller volume of the recycle gas with lower electricity consumption. The size of the compressor and/or the number of compressor stages may also be reduced. Moreover, the process comprises retaining the recycle gas comprising H2 and CO rich gas stream on the retentate side of the membrane thus increasing the recovery of H₂ and CO from the recycle gas. Due to integration of the membrane unit to reduce CO₂ from the recycle gas, back-washing in the flash regeneration unit becomes less important or even obsolete, thus leading to savings in solvent circulation, and also reduces utility consumption in the plant.

According to a third aspect, the present disclosure provides a plant for reducing carbon dioxide (CO₂) content from a recycle gas, wherein the plant comprises:
an absorption unit that is configured to receive a raw synthesis gas comprising the synthesis gas components hydrogen (H₂), carbon monoxide (CO), and CO₂, and a lean solvent, preferably comprising methanol, and that produces a clean synthesis gas and a laden solvent;
a flash regeneration unit that is configured to flash the laden solvent received from the absorption unit and to generate a recycle gas comprising H₂, CO, and CO₂ gas and a partially laden solvent;
a compressor that is configured to compress the recycle gas before directing the recycle gas to the absorption unit; and
a membrane unit that is integrated between the flash regeneration unit and the compressor or between the compressor and the absorption unit, wherein the membrane unit has comprises a CO₂ selective membrane and is configured to receive the recycle gas from the flash regeneration unit after flashing, wherein the membrane unit is configured to reduce the CO₂ content in the recycle gas by permeating a CO₂ rich gas stream through the membrane to a permeate side of the membrane unit and by retaining the recycle gas comprising a H₂ and CO rich gas stream on a retentate side of the membrane.

The plant for reducing the carbon dioxide (CO₂) content from the recycle gas according to present disclosure is of advantage as the recycle gas flow rate is reduced by depleting the CO₂ upstream of the compressor by permeating the CO₂ rich gas stream through the membrane to the permeate side of the membrane, thereby the plant compresses a smaller volume of the recycle gas in the compressor with low electricity consumption. The size of the compressor and/or the number of compressor stages may also be reduced. Moreover, the process retaining the recycle gas comprising H₂ and CO rich gas stream on the retentate side of the membrane thus, increasing the recovery of H₂ and CO from the recycle gas. Due to integration of the membrane unit to obtain CO₂ from the recycle gas in the plant, back-washing in the flash regeneration unit becomes less important or even obsolete, thus leading to savings in solvent circulation, and also reduces utility consumption in the plant.

Embodiments of the present disclosure eliminate the aforementioned drawbacks in existing known approaches for reducing CO₂ content in a recycling process. The advantage of the embodiments according to the present disclosure is that the embodiments enable to reduce the volume of the recycle gas to be compressed by reducing the CO₂ content, such that the compressor compresses a smaller volume of the recycle gas with low electricity consumption, thereby reducing operating cost for the plant. The size of the compressor and/or the number of compressor stages may also be reduced. Also, recovery of H₂ and CO from the recycle gas is increased by retaining the recycle gas comprising the H₂ and CO rich gas stream on the retentate side of the membrane unit.

Additional aspects, advantages, features, and objects of the present disclosure are made apparent from the drawings and the detailed description of the illustrative embodiments constructed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, the same elements have been indicated by identical numbers. Embodiments of the present disclosure will now be described, by way of example only, with reference to the following diagrams wherein:
FIG. 1 is a block diagram that illustrates a first layout of a plant for reducing carbon dioxide (CO₂) content from a recycle gas which employs a non-selective absorption process according to an embodiment of the present disclosure; and
FIG. 2 is a block diagram that illustrates a second layout of a plant for reducing carbon dioxide (CO₂) content from a recycle gas which employs a selective absorption process according to an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

According to a first aspect, the present disclosure provides a process for reducing carbon dioxide (CO₂) content from a recycle gas in a plant, wherein the process comprises: providing an absorption unit that receives a raw synthesis gas comprising the synthesis gas components hydrogen (H₂), carbon monoxide (CO), and CO₂, and a lean solvent, preferably comprising methanol, and that produces a clean synthesis gas and a laden solvent; providing a flash regeneration unit that flashes the laden solvent received from the absorption unit to generate a recycle gas comprising H₂, CO, and CO₂ and a partially laden solvent; providing a compressor that compresses the recycle gas before directing the recycle gas to the absorption unit; integrating a membrane unit between the flash regeneration unit and the compressor or between the compressor and the absorption unit, wherein the membrane unit comprises a CO₂ selective membrane and receives the recycle gas from the flash regeneration unit after flashing; and reducing the CO₂ content in the recycle gas by permeating a CO₂ rich gas stream through the membrane to a permeate side of the membrane and retaining the recycle gas comprising a H₂ and CO rich gas stream on a retentate side of the membrane.

The process for reducing the CO₂ content from the recycle gas in the plant according to present disclosure is of advantage as the process enables to decrease the volume of the recycle gas to be compressed by application of the membrane unit, such that the compressor compresses a smaller volume of the recycle gas with low electricity consumption, thereby reducing utility consumption in the plant and increasing the recovery of H₂ and CO from the recycle gas. The size of the compressor and/or the number of compressor stages may also be reduced. Moreover, the process retaining the recycle gas comprising H₂ and CO rich gas stream on the retentate side of the membrane thus, increasing the recovery of H₂ and CO from the recycle gas.

The membrane unit enables the CO₂ to permeate faster, for example about 5 times faster, than the H₂ and the CO leading to a reduction of the CO₂ content in the retentate side of the membrane at higher pressure whereas the CO₂ rich stream is obtained on the permeate side of the membrane at lower pressure.

The membrane unit may be integrated downstream of the flash regeneration unit. The integration of a membrane unit avoids rewashing or backwashing of the CO₂ in the flash regeneration unit. This leads to less required solvent and subsequent savings in operational expenditure (OPEX) in terms of electricity, cooling water and low pressure (LP) steam for solvent regeneration.

The clean synthesis gas herein may be depleted of acid and/or undesired components such as carbon dioxide (CO₂) or other acidic components like hydrogen sulfide (H₂S).

Optionally, the process comprises providing a recovery unit that receives the partially laden solvent from the flash regeneration unit and optionally at least a part of the CO₂ rich gas stream from the membrane unit; and recovering, using the recovery unit, the CO₂ gas from the partially laden solvent and optionally from the CO₂ rich gas stream to generate a pure CO₂ gas stream and a CO₂-lean solvent that is depleted in CO₂.

Optionally, the recycle gas comprising the H₂ and CO rich gas stream is compressed, using the compressor, and transmitted to the absorption unit to increase the recovery of synthesis gas components comprising hydrogen (H₂) and carbon monoxide (CO).

The process enables the absorption unit to maximize the recovery of the H₂ gas and the CO gas from the recycle gas. The flow rate of the recycle gas is reduced by depleting the CO₂ upstream of the compressor, which reduces the power demand of the compressor.

Optionally, the process comprises implementing one or more stages on the flash regeneration unit to produce at least one CO₂ rich stream from the raw synthesis gas.

Optionally, the flash regeneration unit is a medium pressure flash regeneration unit.

Optionally, the process comprises providing a thermal regeneration unit that receives the CO₂-lean solvent from the recovery unit which still comprises undesired components, especially sulfur components like H₂S; and converting, using the thermal regeneration unit, the CO₂-lean solvent into the lean solvent, wherein the lean solvent is depleted in undesired components and is transmitted from the thermal regeneration unit to the absorption unit.

Optionally, the process comprises providing a purification unit that receives the CO₂ gas from the flash regeneration unit and the pure CO₂ gas stream from the recovery unit and purifies the CO₂ gas to produce a purified CO₂ gas.

Optionally, the process reduces solvent requirement for rewashing the CO₂ in recycle gas generated in the flash regeneration unit and subsequent savings in electricity, cooling water, and flow streams for solvent regeneration.

According to a second aspect, the present disclosure provides a process for recovering synthesis gas components from a recycle gas in a plant, comprising: providing an absorption unit that receives a raw synthesis gas comprising the synthesis gas components hydrogen (H₂), carbon monoxide (CO), and a lean solvent, preferably comprising methanol, and that produces a clean synthesis gas and a laden solvent; providing a flash regeneration unit that flashes the laden solvent received from the absorption unit to generate a recycle gas comprising H₂, CO, and CO₂ gas and partially laden solvent; providing a compressor that compresses the recycle gas before directing the recycle gas to the absorption unit; integrating a membrane unit between the flash regeneration unit and the compressor or between the compressor and the absorption unit, wherein the membrane unit comprises a CO₂ selective membrane and receives the recycle gas from the flash regeneration unit after flashing; reducing the CO₂ content in the recycle gas by permeating a CO₂ rich gas stream through the membrane to a permeate side of the membrane and retaining the recycle gas comprising a H₂ and CO rich gas stream on a retentate side of the membrane; and compressing the recycle gas comprising the H₂ and CO rich gas stream using the compressor and transmitting the compressed recycle gas to the absorption unit to increase the recovery of synthesis gas components comprising hydrogen (H₂) and carbon monoxide (CO).

The process for recovering the synthesis gas components from the recycle gas in the plant according to present disclosure is of advantage in that the process enables to decrease the volume of the recycle gas to be compressed by application of the membrane unit, such that the compressor compresses a smaller volume of the recycle gas with lower electricity consumption, thereby reducing utility consumption in the plant and increasing the recovery of H₂ and CO from the recycle gas. The size of the compressor and/or the number of compressor stages may also be reduced. Moreover, the process retaining the recycle gas comprising H₂ and CO rich gas stream on the retentate side of the membrane thus, increasing the recovery of H₂ and CO from the recycle gas.

Optionally, the process comprises providing a recovery that receives the partially laden solvent from the flash regeneration unit and optionally at least a part of the CO₂ rich gas stream from the membrane unit; and recovering, using the recovery unit, the CO₂ gas from the partially laden solvent and optionally from the CO₂ rich gas stream to generate a pure CO₂ gas stream and a CO₂-lean solvent depleted in CO2.

Optionally, the process comprises providing a thermal regeneration unit that receives the CO₂-lean solvent from the recovery unit (110) which still comprises undesired components, especially sulfur components like H₂S ; and converting, using the thermal regeneration unit, the CO₂-lean solvent into a lean solvent, wherein the lean solvent is depleted in undesired components and is transmitted from the thermal regeneration unit to the absorption unit.

According to a third aspect, the present disclosure provides a plant for reducing carbon dioxide (CO₂) content from a recycle gas, wherein the plant comprises: an absorption unit that is configured to receive a raw synthesis gas comprising the synthesis gas components hydrogen (H₂), carbon monoxide (CO), and CO₂, and a lean solvent, preferably comprising methanol, and that produces a clean synthesis gas and a laden solvent; a flash regeneration unit that is configured to flash the laden solvent received from the absorption unit and to generate a recycle gas comprising H₂, CO, and CO₂ gas and a partially laden solvent; a compressor that is configured to compress the recycle gas before directing the recycle gas to the absorption unit; and a membrane unit that is integrated between the flash regeneration unit and the compressor or between the compressor and the absorption unit, wherein the membrane unit has comprises a CO₂ selective membrane and is configured to receive the recycle gas from the flash regeneration unit after flashing, wherein the membrane unit is configured to reduce the CO₂ content in the recycle gas by permeating a CO₂ rich gas stream through the membrane to a permeate side of the membrane unit and by retaining the recycle gas comprising a H₂ and CO rich gas stream on a retentate side of the membrane.

The plant for reducing the CO₂ content from the recycle gas according to present disclosure is of advantage as the process enables to decrease the volume of the recycle gas to be compressed by application of the membrane unit, such that the compressor compresses a smaller volume of the recycle gas with lower electricity consumption, thereby reducing utility consumption in the plant and increasing the recovery of H₂ gas and CO gas from the recycle gas. The size of the compressor and/or the number of compressor stages may also be reduced. Moreover, the process retaining the recycle gas comprising H₂ and CO rich gas stream on the retentate side of the membrane thus, increasing the recovery of H₂ and CO from the recycle gas.

Optionally, the plant comprises a recovery unit that is configured to: receive the partially laden solvent from the flash regeneration unit and optionally at least a part of the CO₂ rich gas stream from the membrane unit; and recover the CO₂ gas from the CO₂ rich gas stream and the partially laden solvent to generate a pure CO₂ gas stream and a CO₂-lean solvent that is depleted in CO₂.

Optionally, the process comprises implementing one or more stages on the flash regeneration unit to produce CO₂ rich streams from the partially laden solvent, which are lean in H₂ and CO, at flash pressure levels lower than the flash pressure of the flash regeneration unit generating the recycle gas.

Optionally, the plant comprises a thermal regeneration unit that is configured to: receive the CO₂-lean solvent from the recovery unit which still comprises undesired components, especially sulfur components like H₂S; and convert the CO₂-lean solvent into a lean solvent, wherein the lean solvent is depleted in undesired components and is transmitted from the thermal regeneration unit to the absorption unit. The lean solvent may be transmitted from the thermal regeneration unit to the absorption unit.

Optionally, the plant comprises a purification unit that is configured to receive the CO₂ gas from the flash regeneration unit and the pure CO₂ gas stream from the recovery unit and purify to produce a purified CO₂ gas.

Optionally, the plant enables the process to obtain the CO₂ in a range of 40% to 70% in the permeate side of the membrane.

A table below illustrates simulation results of utility consumption of a Rectisol unit using the process of the present disclosure and an existing solution. The process of the present disclosure excludes heating and cooling of the feed stream to the membrane.

| Utility | Unit | Existing Solution | Present Disclosure | Comparison |
|---|---|---|---|---|
| Electricity | kWh | 3419 | 3326 | 97% |
| Cooling Water | kWh | 6437 | 6246 | 97% |
| LP N₂ | Nm³/h | 12328 | 12328 | 100% |
| LP steam | kWh | 6950 | 6600 | 95% |

A table below illustrates simulation results of utility consumption of a Rectisol unit with the membrane unit using the process of the present disclosure and an existing solution. The process of the present disclosure includes heating and cooling of a feed stream to the membrane.

| Utility | Unit | Existing Solution | Present Disclosure | Comparison |
|---|---|---|---|---|
| Electricity | kWh | 3419 | 3385 | 99% |
| Cooling Water | kWh | 6437 | 6273 | 97% |
| LP N₂ | Nm³/h | 12328 | 12328 | 100% |
| LP steam | kWh | 6950 | 6812 | 98% |

The plant enables to save electricity and also reduce other utility consumption by integration of the membrane unit into the plant.

Embodiments of the present disclosure substantially eliminate or at least partially address the aforementioned technical drawbacks in existing technologies in reducing carbon dioxide (CO₂) content from the recycle gas thereby improving recovery of valuable products from the recycle gas and reducing utility consumption.

### DETAILED DESCRIPTION OF THE DRAWINGS

**FIG. 1** is a block diagram that illustrates a first layout of a plant **100** for reducing carbon dioxide (CO₂) content from a recycle gas which employs an absorption process according to an embodiment of the present disclosure. The plant **100** includes an absorption unit **102,** a flash regeneration unit **104,** a compressor **106A,** liquid pumps **106B, 106N,** a membrane unit **108,** a recovery unit **110,** a thermal regeneration unit **112,** a purification unit **114,** and a heat exchanger **116.** The absorption unit **102** is configured to receive a raw synthesis gas and a lean solvent and to produce a clean synthesis gas and a laden solvent. The flash regeneration unit **104** is configured to flash the laden solvent received from the absorption unit **102** and generate a recycle gas including CO₂ gas and a partially laden solvent.

Optionally, the flash regeneration unit **104** implements one or more stages to produce CO₂ rich streams from the partially laden solvent, which are lean in H₂ and CO, at flash pressure levels lower than the flash pressure of the flash regeneration unit generating the recycle gas.

A compressor **106A** is configured to compress the recycle gas before directing the recycle gas to the absorption unit **102.** The membrane unit **108** is integrated between the flash regeneration unit **104** and the compressor **106A.** The membrane unit **108** includes a membrane and is configured to receive the recycle gas from the flash regeneration unit **104** after flashing. The membrane unit **108** is configured to reduce the CO₂ content in the recycle gas by permeating a CO₂ rich gas stream through the membrane to a permeate side of the membrane unit **108** and by retaining the recycle gas including a hydrogen (H₂) and carbon monoxide (CO) rich gas stream on a retentate side of the membrane unit **108.** The recovery unit **110** is configured to receive the partially laden solvent from the flash regeneration unit **104** and the CO₂ rich gas stream from the membrane unit **108,** and to recover the CO₂ gas from the CO₂ rich gas stream and the partially laden solvent to generate a pure CO₂ gas stream and a CO₂-lean solvent that is depleted in CO₂.

The thermal regeneration unit **112** is configured to receive the CO₂-lean solvent from the recovery unit **110** which still comprises undesired acidic components like H₂S , to convert the CO₂-lean solvent into the lean solvent and to produce an impure CO₂ stream also comprising the undesired acidic components. The lean solvent is transmitted from the thermal regeneration unit **112** to the absorption unit **102.** The purification unit **114** is configured to receive the CO₂ gas from the flash regeneration unit **104** and the pure CO₂ gas stream from the recovery unit **110,** and purify to produce a purified CO₂ gas. The heat exchanger **116** transfers heat between fluids passing to the thermal regeneration unit **112** from the absorption unit **102.** Optionally, the heat exchanger **116** transfers heat between the fluids passing to the absorption unit **102** from the thermal regeneration unit **112.**

Optionally, the compressor **106A** compresses the recycle gas including the H₂ and CO rich gas stream and transmits it to the absorption unit **102** to increase the recovery of the synthesis gas components including hydrogen (H₂) and carbon monoxide (CO). Optionally, the liquid pump **106B** conveys fluids from the heat exchanger **116** and transmits them to the absorption unit **102.** Optionally, the liquid pump **106N** conveys fluids from the recovery unit **110** and transmits them to the thermal regeneration unit **112.** The fluids from the recovery unit **110** may be the CO₂-lean solvent.

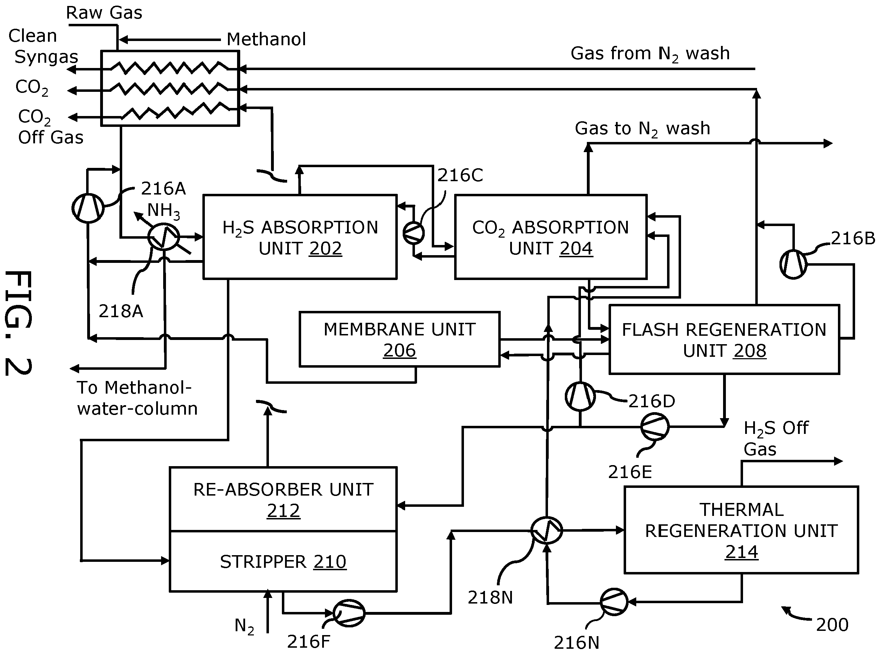

**FIG.** 2 is a block diagram that illustrates a second layout of a plant **200** for reducing carbon dioxide (CO₂) content from a recycle gas which employs a selective absorption process according to an embodiment of the present disclosure. The plant **200** includes a H₂S absorption unit **202** and a CO₂ absorption unit **204** according to the selective Rectisol process, a membrane unit **206,** a flash regeneration unit **208,** a stripper **210,** a re-absorber unit **212,** a thermal regeneration unit **214,** one or more compressors **216A-B,** one or more liquid pumps **216C-N,** and one or more heat exchangers **218A-N.** The H₂S absorption unit **202** is configured to receive a raw synthesis gas and a part of the CO₂ laden solvent from the CO₂ absorption unit 204 and to selectively absorb sulfur components to produce sulfur components depleted synthesis gas and a laden solvent enriched in CO₂ and sulfur components. The CO₂ absorption unit **204** is configured to receive sulfur components depleted synthesis gas and a lean solvent and to absorb CO₂ components to produce a clean synthesis gas and a CO₂ laden solvent enriched in CO₂. The flash regeneration unit **208** is configured to flash the CO₂ laden solvent received from the CO₂ absorption unit **204** and to generate a recycle gas including CO₂ gas and a partially CO₂ laden solvent. The membrane unit **206** is configured to reduce the CO₂ content in the recycle gas by permeating a CO₂ rich gas stream through a membrane to a permeate side of the membrane unit **206** and by retaining the recycle gas including a hydrogen (H₂) and carbon monoxide (CO) rich gas stream on a retentate side of the membrane unit **206.** The stripper **210** is configured to receive the laden solvent from the H₂S absorption unit **202** and to produce a partially laden solvent that includes the sulfur components and which is depleted in CO₂, and a CO₂ gas stream with a small amount of sulfur components, for example H₂S. The re-absorber unit **212** is configured to receive the partially CO₂ laden solvent from the flash regeneration unit **208** and to absorb the small amount of sulfur components like H₂S from the CO₂ gas stream produced in the stripper unit **210** and transmits the partially CO₂ laden solvent enriched in sulfur components to the stripper unit **210.** The partially laden solvent from the stripper unit 210 that includes the sulfur components and which is depleted in CO₂, is transmitted to the thermal regeneration unit **214.** Optionally, the stripper **210** receives nitrogen (N₂) gas to enable CO₂ desorption from the partially laden solvent. The re-absorber unit **212** discharges CO₂+N2 gas to a heat exchanger.

The thermal regeneration unit **214** is configured to receive the partially laden solvent that comprises sulfur components and which is depleted in CO₂ from the stripper unit **210** and to produce a lean solvent and transmits the lean solvent to the CO₂ absorption unit **204.** Optionally, the thermal regeneration unit **214** receives steam for converting the partially laden solvent into the lean solvent and to produce the H₂S offgas which contains sulfur components and the CO₂ comprised in the partially laden solvent.

The liquid pump **216E** is configured to pump a part of the partially laden solvent from the flash regeneration unit **208** to the re-absorber unit **212.** The liquid pump **216D** is configured to pump the remaining part of the partially laden solvent from the flash regeneration unit **208** to the CO₂ absorption unit **204.** Optionally, the one or more compressors **216A-B** compresses any of gas flow from the membrane unit **206** to a raw gas conduit, and the gas flow from the flash regeneration unit **208** to the CO₂ product stream. Optionally the liquid pumps **216 F-N** are configured to pump the partially laden solvent flow from the stripper **210** via one or more heat exchangers **218N,** to the thermal regeneration unit **214** or to pump the leant solvent from the thermal regeneration unit **214** via one or more heat exchangers **218 N** to the to the CO₂ absorption unit **202.** Optionally, heat exchanger **218A** transfers heat between the gas passing to the H₂S absorption unit **202** from the raw gas conduit. Optionally, heat exchanger **218N** transfers heat between the liquid passing to the CO₂ absorption unit **202** from the thermal regeneration unit **214** the liquid passing to the thermal regeneration unit **214** from the stripper **210.**

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

## Claims

1. A process (100, 200) for reducing the carbon dioxide (CO₂) content from a recycle gas in a synthesis gas cleaning plant, wherein the process comprises:
providing an absorption unit (102, 202, 204) that receives a raw synthesis gas comprising the synthesis gas components hydrogen (H₂), carbon monoxide (CO), and CO₂, and a lean solvent, preferably comprising methanol, and that produces a clean synthesis gas and a laden solvent;
providing a flash regeneration unit (104, 208) that flashes the laden solvent received from the absorption unit (102, 202, 204) to generate a recycle gas comprising H₂, CO, and CO₂ and a partially laden solvent;
providing a compressor (106A, 216A) that compresses the recycle gas before directing the recycle gas to the absorption unit (102, 202, 204);
integrating a membrane unit (108, 206) between the flash regeneration unit (104, 208) and the compressor (106A, 216A) or between the compressor (106A, 2016A) and the absorption unit (102, 202, 204), wherein the membrane unit (108, 206) comprises a CO₂ selective membrane and receives the recycle gas from the flash regeneration unit (104, 208) after flashing; and
reducing the CO₂ content in the recycle gas by permeating a CO₂ rich gas stream through the membrane to a permeate side of the membrane and retaining the recycle gas comprising a H₂ and CO rich gas stream on a retentate side of the membrane.

2. The process according to claim 1, wherein the process comprises:
providing a recovery unit (110, 210, 212) that receives the partially laden solvent from the flash regeneration unit (104, 208) and optionally at least a part of the CO₂ rich gas stream from the membrane unit (108, 206); and
recovering, using the recovery unit (110, 210, 212), the CO₂ gas from the partially laden solvent and optionally from the CO₂ rich gas stream to generate a pure CO₂ gas stream and a CO₂-lean solvent that is depleted in CO₂.

3. The process according to any one of the preceding claims, wherein the recycle gas comprising the H₂ and CO rich gas stream is compressed, using the compressor (106A, 216A), and transmitted to the absorption unit (102, 202, 204) to increase the recovery of synthesis gas components comprising hydrogen (H₂) and carbon monoxide (CO).

4. The process according to any one of the preceding claims, wherein the process comprises implementing one or more stages on the flash regeneration unit (104, 208) to produce at least one CO₂ rich stream from the raw synthesis gas.

5. The process according to any one of the claims 2 to 4, wherein the process comprises:
providing a thermal regeneration unit (112, 214) that receives the CO₂-lean solvent from the recovery unit (110, 210, 212) which still comprises undesired components, especially sulfur components like H₂S; and
converting, using the thermal regeneration unit (112, 214), the CO₂-lean solvent into the lean solvent, wherein the lean solvent is depleted in undesired components and is transmitted from the thermal regeneration unit (112, 214) to the absorption unit (102, 202, 204).

6. The process according to any one of the preceding claims, wherein the process comprises providing a purification unit (114) that receives the CO₂ gas from the flash regeneration unit (104, 208) and the pure CO₂ gas stream from the recovery unit (110, 210, 212) and purifies the CO₂ gas to produce a purified CO₂ gas.

7. A process for recovering synthesis gas components from a recycle gas in a plant (100, 200), comprising:
providing an absorption unit (102, 202, 204) that receives a raw synthesis gas comprising the synthesis gas components hydrogen (H₂), carbon monoxide (CO), and a lean solvent, preferably comprising methanol, and that produces a clean synthesis gas and a laden solvent;
providing a flash regeneration unit (104, 208) that flashes the laden solvent received from the absorption unit (102, 202, 204) to generate a recycle gas comprising H₂, CO, and CO₂ gas and partially laden solvent;
providing a compressor (106A, 216A) that compresses the recycle gas before directing the recycle gas to the absorption unit (102, 202, 204);
integrating a membrane unit (108, 206) between the flash regeneration unit (104, 208) and the compressor (106A, 216A) or between the compressor (106A, 2016A) and the absorption unit (102, 202, 204), wherein the membrane unit (108, 206) comprises a CO₂ selective membrane and receives the recycle gas from the flash regeneration unit (104, 208) after flashing;
reducing the CO₂ content in the recycle gas by permeating a CO₂ rich gas stream through the membrane to a permeate side of the membrane and retaining the recycle gas comprising a H₂ and CO rich gas stream on a retentate side of the membrane; and
compressing the recycle gas comprising the H₂ and CO rich gas stream using the compressor (106A, 216A) and transmitting the compressed recycle gas to the absorption unit (102, 202, 204) to increase the recovery of synthesis gas components comprising hydrogen (H₂) and carbon monoxide (CO).

8. The process according to claim 7, wherein the process comprises:
providing a recovery unit (110, 210, 212) that receives the partially laden solvent from the flash regeneration unit (104, 208) and optionally at least a part of the CO₂ rich gas stream from the membrane unit (108, 206); and
recovering, using the recovery unit (110, 210, 212), the CO₂ gas from the partially laden solvent and optionally from the CO₂ rich gas stream to generate a pure CO₂ gas stream and a CO₂-lean solvent depleted in CO₂.

9. The process according to claim 8, wherein the process comprises:
providing a thermal regeneration unit (112, 214) that receives the CO₂-lean solvent from the recovery unit (110) which still comprises undesired components, especially sulfur components like H₂S ; and
converting, using the thermal regeneration unit (112, 214), the CO₂-lean solvent into a lean solvent, wherein the lean solvent is depleted in undesired components and is transmitted from the thermal regeneration unit (112, 214) to the absorption unit (102, 202, 204).

10. A plant (100, 200) for reducing the carbon dioxide (CO₂) content from a recycle gas in a synthesis gas cleaning plant, wherein the plant (100, 200) comprises:
an absorption unit (102, 202, 204) that is configured to receive a raw synthesis gas comprising the synthesis gas components hydrogen (H₂), carbon monoxide (CO), and CO₂, and a lean solvent, preferably comprising methanol, and that produces a clean synthesis gas and a laden solvent;
a flash regeneration unit (104, 208) that is configured to flash the laden solvent received from the absorption unit (102, 202, 204) and to generate a recycle gas comprising H₂, CO, and CO₂ gas and a partially laden solvent;
a compressor (106A, 216A) that is configured to compress the recycle gas before directing the recycle gas to the absorption unit (102, 202, 204); and
a membrane unit (108, 206) that is integrated between the flash regeneration unit (104, 208) and the compressor (106A, 216A) or between the compressor (106A, 206A) and the absorption unit (102, 202, 204), wherein the membrane unit (108, 206) has comprises a CO₂ selective membrane and is configured to receive the recycle gas from the flash regeneration unit (104, 208) after flashing, wherein the membrane unit (108, 206) is configured to reduce the CO₂ content in the recycle gas by permeating a CO₂ rich gas stream through the membrane to a permeate side of the membrane unit (108, 206) and by retaining the recycle gas comprising a H₂ and CO rich gas stream on a retentate side of the membrane (108, 206).

11. The plant (100, 200) according to claim 10, wherein the plant (100, 200) comprises a recovery unit (110, 210, 212) that is configured to:
receive the partially laden solvent from the flash regeneration unit (104, 208) and optionally at least a part of the CO₂ rich gas stream from the membrane unit (108, 206); and
recover the CO₂ gas from the CO₂ rich gas stream and the partially laden solvent to generate a pure CO₂ gas stream and a CO₂-lean solvent that is depleted in CO₂.

12. The plant (100, 200) according to claim 10 or 11, wherein the plant (100, 200) comprises a thermal regeneration unit (112, 214) that is configured to:
receive the CO₂-lean solvent from the recovery unit (110, 210, 212) which still comprises undesired components, especially sulfur components like H₂S; and
convert the CO₂-lean solvent into a lean solvent, wherein the lean solvent is depleted in undesired components and is transmitted from the thermal regeneration unit (112, 214) to the absorption unit (102, 202, 204).

13. The plant (100, 200) according to any one of the preceding plant claims, wherein the plant (100, 200) comprises a purification unit (114) that is configured to
receive the CO₂ gas from the flash regeneration unit (104, 208) and the pure CO₂ gas stream from the recovery unit (110, 210, 212), and
purify to produce a purified CO₂ gas.
